(19) Europäisches Patentamt
European Patent Office
Office européen des brevets

(11) Veröffentlichungsnummer: **0 616 771 A1**

(12) # EUROPÄISCHE PATENTANMELDUNG

(21) Anmeldenummer: **94104277.2**

(22) Anmeldetag: **18.03.94**

(51) Int. Cl.5: **A01N 43/54**, //(A01N43/54, 37:50)

(30) Priorität: **26.03.93 DE 4309857**

(43) Veröffentlichungstag der Anmeldung: **28.09.94 Patentblatt 94/39**

(84) Benannte Vertragsstaaten: **AT BE CH DE DK ES FR GB GR IE IT LI NL PT SE**

(71) Anmelder: **BASF Aktiengesellschaft**
**Carl-Bosch-Strasse 38**
**D-67063 Ludwigshafen (DE)**

(72) Erfinder: **Mueller, Bernd, Dr.**
**Jean-Ganss-Strasse 21**
**D-67227 Frankenthal (DE)**
Erfinder: **Sauter, Hubert, Dr.**
**Neckarpromenade 20**
**D-68167 Mannheim (DE)**
Erfinder: **Hampel, Manfred, Dr.**
**Im Biengarten 15**
**D-67435 Neustadt (DE)**
Erfinder: **Saur, Reinhold, Dr.**
**Koenigsberger Strasse 9**
**D-67459 Boehl-Iggelheim (DE)**
Erfinder: **Schelberger, Klaus**
**Traminerweg 2**
**D-67161 Goennheim (DE)**
Erfinder: **Ammermann, Eberhard, Dr.**
**Von-Gagern-Strasse 2**
**D-64646 Heppenheim (DE)**
Erfinder: **Lorenz, Gisela, Dr.**
**Erlenweg 13**
**D-67434 Neustadt (DE)**

(54) **Fungizide Mischung.**

(57) Fungizide Mischung aus
a) α-Methoximino-2-[(2-methylphenoxy)-methyl]-phenylessigsäuremethylester

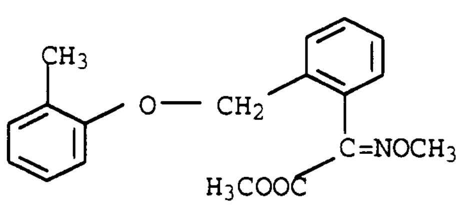

und
b) 2-[2-(6-(2-Cyanophenoxy)-pyrimidin-4-yloxy)-phenyl]-3-methoxy-acrylsäuremethylester

EP 0 616 771 A1

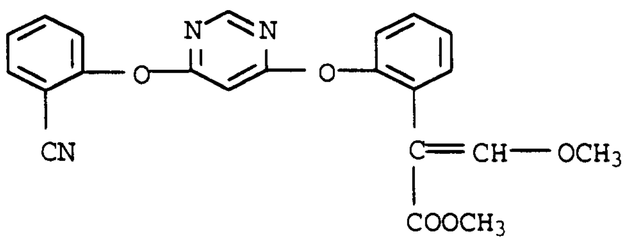

und Verfahren zur Bekämpfung von Pilzen mit dieser Mischung.

Die vorliegende Erfindung betrifft fungizide Mischungen mit synergistischer fungizider Wirkung und verfahren zur Bekämpfung von Pilzen mit diesen Mischungen.

Es ist bekannt, α-Methoximino-2-[(2-methylphenoxy)-methyl]-phenylessigsäuremethylester

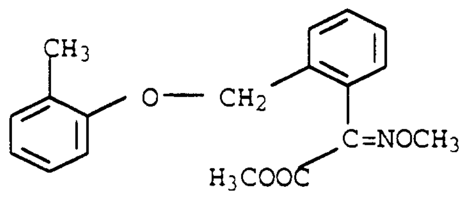

als Fungizid zu verwenden (EP 253 213). Es ist ferner bekannt, den Wirkstoff 2-[2-(6-(2-Cyanophenoxy)-pyrimidin-4-yloxy)-phenyl]-3-methoxy-acrylsäuremethylester

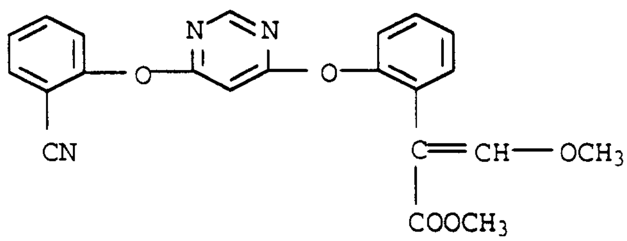

als Fungizid zu verwenden (EP 382 375).

Es wurde nun gefunden, daß eine Mischung aus

a) α-Methoximino-2-[(2-methylphenoxy)-methyl]-phenylessigsäuremethylester

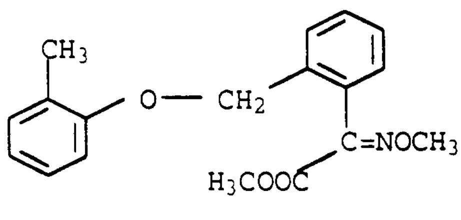

und

b) 2-[2-(6-(2-Cyanophenoxy)-pyrimidin-4-yloxy)-phenyl]-3-methoxy-acrylsäuremethylester

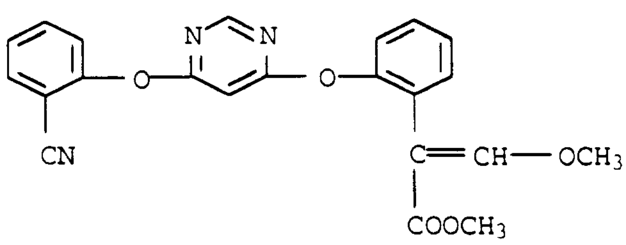

eine synergistische fungizide Wirkung hat. Das Mischungsverhältnis (Gewichtsverhältnis) der Verbindungen a) und b) wird so gewählt, daß eine synergistische fungizide Wirkung auftritt, beispielsweise Verbindung a) : Verbindung b) wie 10 : 1 bis 1 : 10, beispielsweise 5 : 1 bis 1 : 5, insbesondere 3 : 1 bis 1 : 3, vorzugsweise 2 : 1 bis 1 : 2. Die synergistische Wirkung der Mischung zeigt sich darin, daß die fungizide Wirkung der Mischung a) + b) größer ist als die Summe der fungiziden Wirkungen von a) und von b).

Die Komponente a), kann hinsichtlich der -C = N-Doppelbindung in zwei stereoisomeren Formen vorliegen. Bevorzugt ist das (E)-Isomere.

Die Erfindung umfaßt Mischungen, die die reinen Isomeren der Verbindung a) enthalten, insbesondere das (E)-Isomere, als auch Mischungen, die Gemische der Isomeren enthalten.

Bevorzugt werden solche Mischungen, die die Komponente a) überwiegend in Form des (E)-Isomeren enthalten.

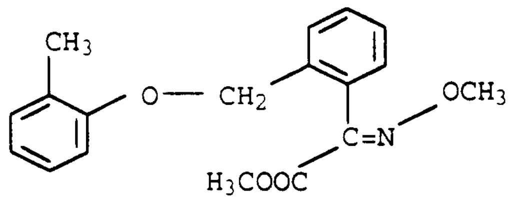

a, (E)-Isomer

In der Praxis setzt man vorteilhaft die reinen Wirkstoffe a) und b) ein, denen man auch weitere Wirkstoffe wie Insektizide, Akarizide, Nematizide, Herbizide, weitere Fungizide, Wachstumsregulatoren und/oder Düngemittel zufügen kann.

Die erfindungsgemäßen fungiziden Mischungen können beispielsweise in Form von direkt versprühbaren Lösungen, Pulvern, Suspensionen, auch hochprozentigen wäßrigen, öligen oder sonstigen Suspension oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feine Verteilung der erfindungsgemäßen Wirkstoffe gewährleisten.

Normalerweise werden die Pflanzen mit den Mischungen besprüht oder bestäubt oder die Samen der Pflanzen mit den Mischungen behandelt.

Die Formulierungen werden in bekannter Weise hergestellt, z.B. durch Verstrecken der Mischung mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmitteln als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkohol- sulfaten, sowie Salze sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Mischungen zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Verbindungen werden angewendet, indem man die Pilze oder die vor Pilzbefall zu schützenden Saatgüter, Pflanzen, Materialien oder den Erdboden mit einer fungizid wirksamen Menge der Mischungen behandelt.

Die Anwendung erfolgt vor oder nach der Infektion der Materialien, Pflanzen oder Samen durch die Pilze.

Speziell eignen sich die Mischungen zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaecualis (Schorf) an Äpfeln,
Helminthosporium-Arten an Getreide,
Septoria nodorum an Weizen,
Rhynchosporium an Getreide,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die neuen Mischungen können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen der erfindungsgemäßen Mischungen liegen je nach Art des gewünschten Effektes zwischen 0,01 und 3 kg Wirkstoffmischung pro ha.

Bei der Saatgutbehandlung werden im allgemeinen Aufwandmengen der Wirkstoffmischungen von 0,001 bis 50 g, vorzugsweise 0,01 bis 10 g je Kilogramm Saatgut benötigt.

Biologische Versuche

Beispiel 1

Eradikative Wirkung gegen Weizenmehltau

Weizenpflanzen der Sorte "Kanzler" wurden im 3-Blattstadium in einem Versuch mit triazolresistentem Weizenmehltau (Erysiphe graminis var. tritici) inokuliert und bei einem Pilzbefall von etwa 30 % mit den wäßrigen Wirkstoffaufbereitungen in den angegebenen Konzentrationen behandelt. Die Wassermenge entsprach 200 l/ha. Die Pflanzen wurden im Gewächshaus für 20 Tage bei 18 bis 22 °C kultiviert. Danach erfolgte die Auswertung durch Feststellung der befallenen Blattfläche in Prozent. Diese Werte wurden in Wirkungsgrade umgerechnet. Die zu erwartenden Wirkungsgrade der Wirkstoffmischung wurden nach der Colby-Formel (Colby, S.R. "Calculating synergistic and antagonistic responses of herbicide combinations", Weeds, 15, S. 20-22, 1967) ermittelt und mit den beobachteten Wirkungsgraden verglichen.

Die Werte für die fungizide Wirkung schwanken zwischen den einzelnen Versuchen, weil die Pflanzen in den einzelnen Versuchen unterschiedlich starken Befall aufweisen und dadurch auch die Zahlenwerte der fungiziden Wirkung unterschiedlich ausfallen. Es können daher nur die Ergebnisse innerhalb desselben Versuchs miteinander verglichen werden.

Colby-Formel $E = x + y - x \cdot y/100$

E = zu erwartender Wirkungsgrad, ausgedrückt in % der unbehandelten Kontrolle, beim Einsatz der Wirkstoffe A und B in den Konzentrationen von m und n

x = der Wirkungsgrad, ausgedrückt in % der unbehandelten Kontrolle, beim Einsatz des Wirkstoffes A in einer Konzentration von m

y = der Wirkungsgrad, ausgedrückt in % der unbehandelten Kontrolle, beim Einsatz des Wirkstoffes B in einer Konzentration von n

Wirkstoff

I. α-Methoximino-2-[(2-methylphenoxy)-methyl]-phenylessigsäuremethylester (BAS 490 F)

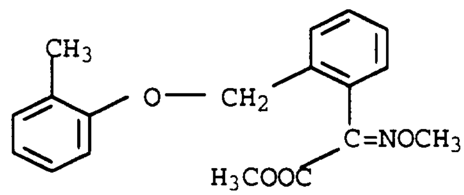

II. Methyl(E)-2-{2-[6-(2-Cyanophenoxy)pyrimidin-4-yloxy)phenyl}-3-methoxyacrylate (ICIA5504)

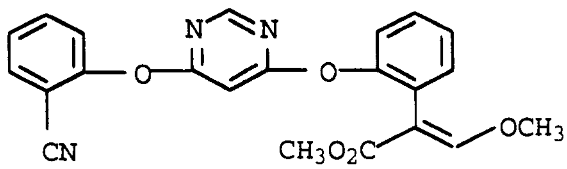

Tabelle 1
Erysiphe graminis-Test (Weizen) eradikativ
Erysiphe graminis triazolresistent

| Wirkstoff | Wirkstoffkonzentration in der Spritzbrühe in % | Wirkungsgrad in % der unbehandelten Kontrolle |
|---|---|---|
| Kontrolle (Unbehandelt) | - | 0 |
| I. Wirkstoff bekannt | 0,05 | 50 |
| II. Wirkstoff bekannt | 0,05 | 12 |

Erfindungsgemäße Mischung

| | | |
|---|---|---|
| I. + II. Mischungsverhältnis 1:3 | 0,01 + 0,03 | 59 |

Das Ergebnis zeigt, daß 0,04 % (0,01 + 0,03) der Mischung eine bessere fungizide Wirkung aufweisen als 0,05 % der Einzelwirkstoffe.

Die gleiche Versuchsanstellung mit triazolsensiblem Erysiphe graminis durchgeführt, bestätigte das in Tabelle 1 dargestellte Versuchsergebnis.

Tabelle 2
Erysiphe graminis-Test (Weizen) eradikativ
Erysiphe graminis triazolresistent

| Wirkstoff | Wirkstoffkonzentration in der Spritzbrühe in % | Wirkungsgrad in % der unbehandelten Kontrolle |
|---|---|---|
| Kontrolle (Unbehandelt) | - | 0 |
| I. Wirkstoff bekannt | 0,1<br>0,01 | 55<br>29 |
| II. Wirkstoff bekannt | 0,1<br>0,01 | 22<br>5 |

Erfindungsgemäße Mischung

| | beobachteter Wirkungsgrad | berechneter Wirkungsgrad*) |
|---|---|---|
| I. + II. 0,01 + 0,01 Mischungsverhältnis 1:1 | 43 | 32,55 |
| I. + II. 0,1 + 0,1 Mischungsverhältnis 1:1 | 65 | 53,68 |
| I. + II. 0,01 Mischungsverhältnis 10:1 | 69 | 57,25 |
| I. + II. 0,01 + 0,1 Mischungsverhältnis 1:10 | 53 | 44,62 |

*) berechnet nach der Colby-Formel

Im vorliegenden Ergebnis liegen die beobachteten Wirkungsgrade immer über den nach Colby berechneten Wirkungsgraden.

Die gleiche Versuchsanstellung mit triazolsensiblem Erysiphe graminis durchgeführt, bestätigte das in Tabelle 2 dargestellte Versuchsergebnis.

## Patentansprüche

**1.** Fungizides Mittel, enthaltend eine fungizid wirksame Menge einer Mischung aus

a) α-Methoximino-2-[(2-methylphenoxy)-methyl]-phenylessigsäuremethylester

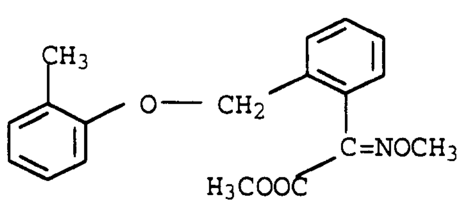

und

b) 2-[2-(6-(2-Cyanophenoxy)-pyrimidin-4-yloxy)-phenyl]-3-methoxy-acrylsäuremethylester

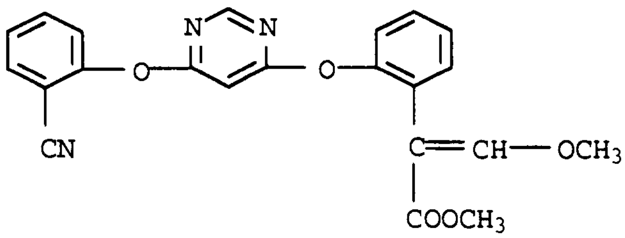
.

2. Verfahren zur Bekämpfung von Pilzen, dadurch gekennzeichnet, daß man eine fungizid wirksame Menge einer Mischung aus
a) α-Methoximino-2-[(2-methylphenoxy)-methyl]-phenylessigsäuremethylester

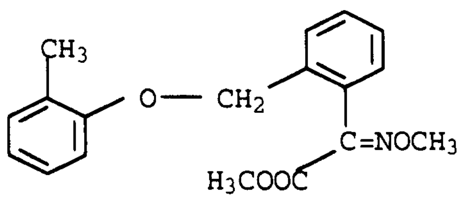

und
b) 2-[2-(6-(2-Cyanophenoxy)-pyrimidin-4-yloxy)-phenyl]-3-methoxy-acrylsäuremethylester

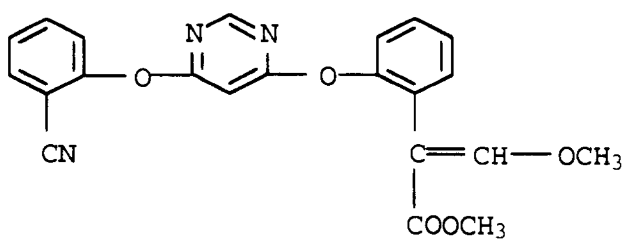

auf die Pilze oder auf die durch Pilzbefall bedrohten Materialien, Flächen, Pflanzen oder Saatgüter einwirken läßt.

3. Fungizid gemäß Anspruch 1, enthaltend die Verbindungen a) und b) in einer eine synergistische Fungizidwirkung erzeugenden Menge.

4. Fungizid gemäß Anspruch 1, enthaltend die Verbindungen a) und b) im Gewichtsverhältnis a : b wie 10 : 1 bis 1 : 10.

Europäisches Patentamt

# EUROPÄISCHER RECHERCHENBERICHT

Nummer der Anmeldung
EP 94 10 4277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | RESEARCH DISCLOSURE<br>Bd. 346, Nr. 121 , Februar 1993 , HAVANT GB<br>Seite 158<br>ANONYMOUS 'mixtures of fungicides'<br>* Absatz 4 - Zeile 6 *<br>--- | 1-4 | A01N43/54<br>//(A01N43/54, 37:50) |
| A | RESEARCH DISCLOSURE<br>Bd. 338, Nr. 93 , Juni 1992 , HAVANT GB<br>Seiten 506 - 510<br>ANONYMOUS 'mixtures of fungicides and insecticides'<br>----- | | |

RECHERCHIERTE SACHGEBIETE (Int.Cl.5)

A01N

Der vorliegende Recherchenbericht wurde für alle Patentansprüche erstellt

| Recherchenort | Abschlußdatum der Recherche | Prüfer |
|---|---|---|
| DEN HAAG | 28. April 1994 | Decorte, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument